(19) **Europäisches Patentamt / European Patent Office / Office européen des brevets**

(11) **EP 1 778 432 B1**

(12) **FASCICULE DE BREVET EUROPEEN**

(45) Date de publication et mention
de la délivrance du brevet:
**22.02.2012 Bulletin 2012/08**

(51) Int Cl.:
***B23K 35/02*** *(2006.01)* ***B23K 35/30*** *(2006.01)*
***B23K 9/173*** *(2006.01)*

(21) Numéro de dépôt: **05857315.5**

(22) Date de dépôt: **22.06.2005**

(86) Numéro de dépôt international:
**PCT/FR2005/050481**

(87) Numéro de publication internationale:
**WO 2006/087434 (24.08.2006 Gazette 2006/34)**

(54) **FIL FOURRE DE SOUDAGE SANS LAITIER ET A FORTE TENEUR EN SILICIUM POUR SOUDAGE DES ACIERS FERRITIQUES**

SCHLACKEFREIER FLUSSMITTELKERNSCHWEISSDRAHT MIT HOHEM SILIZIUMANTEIL ZUM SCHWEISSEN VON FERRITISCHEN ROSTFREIEN STÄHLEN

FLUX-CORED, SLAG-FREE WELDING WIRE WITH HIGH SILICON CONTENT FOR THE WELDING OF FERRITIC STAINLESS STEELS

(84) Etats contractants désignés:
**AT BE BG CH CY CZ DE DK EE ES FI FR GB GR HU IE IS IT LI LT LU MC NL PL PT RO SE SI SK TR**

(30) Priorité: **12.07.2004 FR 0451500**

(43) Date de publication de la demande:
**02.05.2007 Bulletin 2007/18**

(73) Titulaires:
• **L'AIR LIQUIDE, Société Anonyme pour l'Etude et l'Exploitation des Procédés Georges Claude 75007 Paris (FR)**
• **LA SOUDURE AUTOGENE FRANCAISE 75321 Paris Cedex 07 (FR)**

(72) Inventeur: **LEDUEY, Bruno**
**F-95000 Cergy (FR)**

(74) Mandataire: **Pittis, Olivier et al**
**L'Air Liquide, S.A.,**
**Direction de la Propriété Intellectuelle,**
**75, Quai d'Orsay**
**75321 Paris Cedex 07 (FR)**

(56) Documents cités:
**EP-A- 0 652 071    EP-A- 1 020 250**
**EP-B- 0 988 130    GB-A- 836 296**
**US-A- 3 253 120    US-A- 4 091 147**
**US-A- 5 824 992**

**Description**

La présente invention concerne un fil fourré "sans laitier" (en anglais *metal cored wire*) pour le soudage des aciers ferritiques, c'est-à-dire un fil fourré à poudre métallique fabriqué à partir d'un feuillard ou d'un tube rempli pour le soudage sous flux gazeux permettant d'obtenir des joints de soudure dépourvus d'amas de silicates en surface des cordons et présentant de bonnes valeurs de résilience à basse température.

De façon connue, les fils fourrés du type "sans laitier" se composent d'une gaine ou enveloppe externe en métal et d'un noyau interne constitué presque essentiellement de poudres métalliques, principalement de la poudre de fer, couramment appelées poudres de remplissage ou encore fourrage.

Le fil fourré est formé soit à partir d'une feuille métallique ou feuillard, généralement en acier, formée en « U », remplie desdites poudres métalliques puis formée en « 0 », c'est à dire en un tube, soit à partir d'un tube soudé puis subséquemment rempli de poudres.

Aux poudres métalliques sont parfois ajoutées de très petites quantités de poudres minérales contenant ou formées de composés ou de produits ionisants ou autres.

Ainsi, le document EP-A-988130 enseigne des plages de concentrations possibles des divers éléments chimiques contenus dans le métal déposé, c'est-à-dire le joint soudé, obtenu par mise en oeuvre d'un procédé de soudage sous flux gazeux avec un fil fourré de type rutile (i.e. $TiO_2$) ou de type "sans laitier", conduisant à de bonnes caractéristiques de résilience à basse température tant à l'état brut de soudage qu'après traitement thermique post soudage, c'est-à-dire traitement de détensionnement.

Les fils fourrés du type "sans laitier" selon ce document présentent toutefois l'inconvénient de conduire à des cordons de soudure sur lesquels existent, de place en place, des îlots plus ou moins gros de silicates.

Or, ces silicates plus ou moins adhérents, en plus d'être inesthétiques, peuvent être à l'origine de défauts de soudage, lors de l'exécution de passes successives, en particulier d'instabilités d'arc car les silicates ne sont pas bons conducteurs électriques, et d'inclusions de tout ou partie de ces îlots de silicates qui peuvent se trouver emprisonnés dans le cordon.

De ce fait, ces amas de silicates doivent obligatoirement être éliminés par meulage ou piquage et ce, entre chaque passe de soudage, si l'on désire obtenir une soudure de qualité.

Ils doivent aussi être éliminés sur les passes de finition, lorsque la structure soudée doit ensuite être peinte, pour éviter que ces îlots ne se détachent ultérieurement provoquant ainsi un écaillage de la peinture, ce qui engendrerait un risque important de corrosion et des problèmes esthétiques.

L'apparition d'îlots de silicate à la surface des cordons de soudage avec fil fusible en soudage MAG n'est pas le propre des soudures avec fils fourrés de type "sans laitier". En effet, de tels îlots apparaissent aussi lorsqu'on utilise des fils massifs mais ils sont beaucoup moins importants car alors moins nombreux, plus espacés et moins volumineux.

De même, tous les joints soudés ne peuvent pas subir de traitement de type meulage ou analogue entre les différentes passes de soudage, en particulier lorsque la soudure est réalisée dans un endroit exigu ou étroit dont les faibles dimensions ne permettent pas d'y introduire un outil de meulage ou encore lorsque les passes successives s'enchaînent sans interruption, ce qui est généralement le cas des soudures de raboutage de tubes par exemple.

Le problème qui se pose alors est d'améliorer les fils fourrés "sans laitier" et les dépôts de métal obtenus avec ces fils, c'est-à-dire les joints de soudure, de manière à obtenir des cordons de soudure présentant non seulement un bon état de surface, c'est-à-dire pas ou peu d'amas de silicates, mais aussi de bonnes valeurs de résilience à basse température à l'état brut de soudage, typiquement au alentour de - 40°C, c'est à dire sans traitement thermique post soudage ou après traitement de détensionnement si les exigences de résilience sont moins sévères, par exemple une résilience à - 20°C ou - 30°C seulement.

La solution de l'invention est un fil fourré de soudage comprenant une enveloppe métallique externe et des éléments de remplissage contenus dans ladite enveloppe métallique, lesdits éléments de remplissage représentant de 8 à 27 % de la masse totale du fil et contenant de 2 % à 8 % en poids de silicium, et ladite enveloppe métallique étant formée d'au moins 90% en poids de fer, caractérisé en ce qu'il contient par rapport au poids total du fil : de 0.7% à 1.6% de silicium provenant de l'enveloppe et/ou des éléments de remplissage, de 1% à 2,99% de manganèse, de 0.001% à 0.1% d'aluminium et de 0.001% à 0.2% de titane.

Dans le cadre de l'invention, la proportion de silicium indiquée correspond au silicium amené par l'enveloppe et par les différentes matières premières présentes dans le fourrage, du type Fe-Si, Fe-Si-Mn, Fe-Si-Zr ou tout autres ferro-alliages contenant du silicium. Le silicium est l'élément chimique non métallique de symbole Si, de numéro atomique 14, de masse atomique 28,08, appartenant au groupe IV A de la classification périodique.

Selon le cas, le fil de l'invention peut comprendre l'une ou plusieurs des caractéristiques suivantes :

- les éléments de remplissage représentent de 9 à 22 % de la masse totale du fil, de préférence de 10 à 20%.
- les éléments de remplissage contiennent un ou plusieurs éléments choisis parmi la poudre de fer, les constituants d'éléments désoxydants, les éléments d'alliage et les agents stabilisateurs d'arc. Les différents éléments de remplissage peuvent se trouver sous forme d'un mélange homogène de poudres sèches ou agglomérés entre eux à l'aide d'un liant. Les silicates alcalins, comme le sodium, potassium ou lithium, sont habituellement utilisés dans ce cas.

- il contient, par rapport au poids total du fil, de 0.005% à 0.2% de titane.
- il contient, en outre de 300 à 2000 ppm d'oxygène par rapport au poids total du fil.
- il contient, en outre, par rapport au poids total du fil, en tant qu'agent tensioactif : de 0.001% à 0.03% de soufre et/ou de 0.0001% à 0.05% de sélénium et/ou de 0.0001% à 0.05% de tellure.
- il contient, en outre, par rapport au poids total du fil, de 0.01% à 0.2% de carbone et/ou de 1 à 150 ppm de bore.
- il contient, en outre, par rapport au poids total du fil, en tant qu'élément d'alliage : de 0.015% à 3% de chrome, de préférence moins de 0.6% de chrome, et/ou moins de 8% de nickel et/ou moins de 1.6% de molybdène.
- il contient, en outre, par rapport au poids total du fil, en tant qu'élément d'alliage : de 9% à 20% de chrome et/ou moins de 8% de nickel et/ou moins de 1.6% de molybdène.
- il contient, en outre, par rapport au poids total du fil, de 0.001% à 0.030% de niobium et/ou de 0.001% à 0.030% de vanadium.
- il contient au moins un constituant désoxydant choisi parmi Fe-Mn, Fe-Si, Fe-Si-Mn, Fe-Si-Ti, Fe-Zr et Fe-Si-Zr.
- il contient du titane et/ou du bore. L'élément bore est introduit dans les éléments de remplissage sous forme d'alliages, par exemple le ferro-bore ou tout autre alliage combiné avec le bore. Il peut être aussi introduit dans les éléments de remplissage sous forme de tétraborate de sodium, métaborate de sodium ou tout autre composé salin contenant du bore.
- il contient, en outre, au moins un agent stabilisateur d'arc du type Na et/ ou K, en particulier NaF, $K_2SiF_6$ et $Na_2SiF_6$.
- il contient, en outre, au moins un élément d'alliage contenant du nickel, du chrome et/ou du molybdène, en particulier du nickel métal, Fe-Ni, chrome métal ou Fe-Cr, du molybdène métal ou Fe-Mo.
- l'enveloppe métallique externe du fil est en acier ferritique, martensitique ou austénitique, de préférence en acier ferritique.

L'invention porte aussi sur un procédé de soudage à l'arc électrique sous flux gazeux de protection, dans lequel on réalise un joint de soudure par fusion d'un fil de soudage selon l'invention, de préférence le joint de soudure, c'est-à-dire le métal déposé ainsi obtenu, est réalisé sur une ou plusieurs pièces en acier ferritique, c'est-à-dire telles que définies par les normes EN 10025, EN 10028-2 ou autres analogues.

Selon le cas, le procédé de l'invention peut comprendre l'une ou plusieurs des caractéristiques suivantes :

- le flux gazeux de protection est formé d'un mélange d'un ou plusieurs gaz inertes avec un ou plusieurs gaz oxydants.
- le flux gazeux de protection est formé d'au moins un gaz inerte choisi parmi l'argon et l'hélium et d'au moins un gaz oxydant choisi parmi $CO_2$ et $O_2$.
- le flux gazeux de protection est constitué de 70 à 99.9 % en volume d'argon et de 0.1 à 30 % en volume de $CO_2$ et /ou d'$O_2$.

Selon un autre aspect, l'invention porte aussi sur un joint de soudure ou métal déposé susceptible d'être obtenu par le procédé selon l'invention et/ou au moyen d'un fil fourré selon l'invention, caractérisé en ce qu'il contient, par rapport au poids total de métal déposé, de 0.5% à 1.3 % de silicium, et au moins 80% en poids de fer, en ce qu'il présente une proportion d'amas de silicates tel que : Q < 11, de préférence Q < 9, avec :

$$Q = \frac{\sum s}{S}$$

où : s est la surface des silicates observés (exprimée en $mm^2$) et S est la surface totale de cordon observée (exprimée en $mm^2$), et en ce que la masse m (exprimée en mg pour 100 mm de longueur de cordon examiné) de silicates présents sur le cordon obtenu est telle que : m < 100, de préférence m < 65, de préférence encore m < 20.

Selon le cas, le joint de soudure ou métal déposé de l'invention peut comprendre l'une ou plusieurs des caractéristiques suivantes :

- il contient de 0.001% à 0.050% en poids d'aluminium, de préférence moins de 0.025% d'aluminium, de préférence encore moins de 0.010% d'aluminium. La quantité d'aluminium doit être ajustée à la quantité maximum préconisée ou admissible. En effet, si le fil contient du titane en quantité importante, la quantité d'aluminium doit être réduite au minimum tolérable pour éviter les problèmes mentionnés ci-après.
- il contient, par ailleurs, de 0.005% à 0.05% en poids de titane. En effet, il faut un minimum de titane pour améliorer la stabilité de l'arc et à participer à la réduction de la quantité de silicates sur le cordon. Toutefois, une trop grande quantité de titane conduit à substituer le silicium en formant des composés mixtes silicates-titanates de manganèse et /ou d'aluminium si disponible, ce qui conduit à une quantité de silicates et un aspect de surface inacceptables pour le soudeur.

- il contient de 0.7% à 2% en poids de manganèse.
- il contient de 200 à 800 ppm d'oxygène, de préférence moins de 600 ppm d'oxygène, avantageusement moins de 500 ppm d'oxygène.
- il contient, par ailleurs, de 0.001% à 0.030% de soufre, de 0.0001 % à 0.025% de sélénium et/ou de 0.0001 % à 0.025% de tellure, de préférence moins de 0.025% de soufre.
- il contient de 0.010% à 0.12% en poids de carbone et/ou de 1 à 100 ppm de bore, de préférence moins de 80 ppm de bore. S'il est nécessaire d'améliorer les propriétés mécaniques du joint soudé, il convient d'associer le bore au titane pour favoriser la formation de ferrite aciculaire
- il contient, par ailleurs, moins de 80 ppm d'azote, de préférence moins de 50 ppm d'azote.
- il contient, par ailleurs, moins de 6% de nickel, de 0.01 % à 3% de chrome et/ou moins de 1.5 % de molybdène.
- il contient, par ailleurs, moins de 6% de nickel, de 7% à moins de 18% de chrome et/ou moins de 1,5% de molybdène.
- il contient, par ailleurs, de 0.001 % à 0.030% en poids de niobium et/ou de 0.001 % à 0.030% en poids de vanadium. Leur présence n'est pas souhaitée dans le joint soudé mais on il en faut néanmoins une quantité minimum pour obtenir une microstructure correcte.

Plus généralement, il est apparu, de manière surprenante, que l'augmentation de la teneur en silicium du fil et du métal déposé conduisait, selon l'invention, à une diminution de la quantité de silicate à la surface des cordons et donc à une amélioration notable de leur aspect de surface. En effet, les silicates étant principalement constitués d'oxydes de silicium souvent associés à des oxydes de manganèse, ce qui, dans ce cas, conduit à des îlots de silicates de manganèse, il est surprenant de constater qu'en augmentant la teneur en silicium du métal déposé, on diminue la quantité d'îlots de silicates à la surface des cordons.

Les silicates sur le cordon sont formés à partir de silicium, de manganèse et d'oxygène. On a remarqué que le silicium et le manganèse agissaient ensemble et dans le même sens, c'est-à-dire que plus les quantités de silicium et de manganèse augmentent, moins il apparaît de silicates.

De plus, la quantité d'oxygène contenue dans le fil, sous forme d'oxydes ou d'air emprisonné dans le fil, doit être maîtrisée car l'oxygène est un des principaux composants formateur de silicates.

Il s'ensuit qu'au delà de quantités données de silicium et de manganèse, les silicates se forment alors à nouveau en grand nombre.

Néanmoins, c'est bel et bien ce qui a été constaté en pratique et cela peut vraisemblablement s'expliquer par la modification de la tension superficielle et de la viscosité du métal déposé, ces deux caractéristiques physiques du métal à l'état liquide ayant une influence sur la coalescence et la décantation des particules d'oxydes à l'origine des îlots de silicates que l'on retrouve à la surface des cordons après solidification.

Selon le cas, le fil de soudage de l'invention peut comprendre l'une ou plusieurs des autres caractéristiques techniques suivantes :

- il est fabriqué à partir d'un feuillard ou d'un tube où sont introduits les éléments de remplissage.
- pour améliorer le transfert de métal et donc réduire la quantité de projections, le fil peut contenir aussi au moins un agent stabilisateur d'arc du type Na et/ ou K.
- le fil peut comporter aussi des éléments d'alliage apportant du nickel et/ou du chrome et/ou du molybdène à la soudure. Ceux-ci peuvent être ajoutés notamment dans le cas du soudage de pièces en acier faiblement allié, c'est-à-dire à haute limite d'élasticité, voire même fortement allié, c'est-à-dire des aciers au chrome-molybdène comme les aciers résistants au fluage (contenant environ 9% de chrome et environ 1% de molybdène) ou des aciers ferritique au chrome (11 à 17% en poids) utilisés pour le soudage des pots catalytiques de véhicules par exemple. Dans ces cas très techniques, tel que construction de chaudières de centrales thermiques par exemple, la formation excessive de silicates sur le cordon est aussi préjudiciable au bon déroulement du soudage car engendrant des opérations supplémentaires de meulage. De plus, d'éventuelles inclusions de silicates dans le métal soudé peuvent nécessiter des réparations coûteuses, après l'opération de soudage, lorsqu'elles sont détectées par un contrôle non destructif, par exemple par radiographie aux rayons X ou ultrasons.
- il est de forme tubulaire et a un diamètre externe compris entre 0.8 mm et 2.4 mm, de préférence entre 1 et 2 mm.

Les exemples comparatifs suivants visent à illustrer l'invention en montrant l'influence du contrôle de la teneur en silicium dans le fil fourré sur la formation d'amas de silicates sur le joint de soudage.

Exemple 1 : Fils "sans laitier" selon l'art antérieur

Les essais ci-après ont été réalisés en soudure d'angle à l'aide d'un générateur STARMATIC type 502 TRA commercialisé par LA SOUDURE AUTOGENE FRANCAISE en courant continu avec pôle (+) relié au fil de soudage, pour une intensité de courant de 250 A, une tension de 26 à 28 V (selon le produit), une vitesse de soudage de 40 cm/min avec un gaz de protection constitué de 82% d'argon et 18% de $CO_2$ (% en volume) délivré à un débit de 20 l/min.

Les cordons de soudure ont été réalisés à l'aide de fils de soudage de diamètre égal à 1.2 mm.

Les essais de soudage ont été effectués sur un acier de type S235JR selon la norme EN 10025 et ayant par exemple la composition chimique donnée (% en poids) dans le Tableau 1 suivant.

Tableau 1

| C % | Si % | Mn % | P % | S % | Ni % | Al % | Nb % | Ti % | V % | B(ppm) | Fe |
|------|------|------|-------|-------|-------|-------|-------|-------|-------|------|-------|
| 0.04 | 0.02 | 0.23 | 0.005 | 0.015 | 0.050 | 0.003 | 0.001 | 0.002 | 0.002 | <2 | > 95% |

Le Tableau 2 suivant donne, par ailleurs, les compositions chimiques de chaque échantillon de fil testé (A, B, C).

Tableau 2

| % (en poids) | C | Si | Mn | P | S | Ni | Al | Nb | Ti | V | B (ppm) | Fe |
|------|------|------|------|-------|-------|-------|-------|-------|-------|-------|------|-----|
| A | 0.13 | 0.85 | 1.64 | 0.009 | 0.010 | 0.025 | 0.049 | 0.004 | 0.010 | 0.005 | 5 | >95 |
| B | 0.14 | 0.70 | 1.70 | 0.009 | 0.011 | 0.030 | 0.045 | 0.003 | 0.012 | 0.005 | 5 | >95 |
| C | 0.11 | 0.65 | 2.0 | 0.010 | 0.018 | 0.050 | 0.006 | 0.004 | 0.045 | 0.004 | 54 | >95 |

Le Tableau 3 suivant donne les compositions chimiques (A', B', C') du métal déposé pour chaque échantillon de fil testé.

Tableau 3

| % (poids) | C | Si | Mn | P | S | Ni | Al | Nb | Ti | V | B (ppm) | O (ppm | N (ppm) | Fe |
|---|---|---|---|---|---|---|---|---|---|---|---|---|---|---|
| A' | 0.087 | 0.43 | 1.41 | 0.007 | 0.008 | 0.021 | 0.017 | 0.003 | 0.007 | 0.003 | 4 | 518 | 78 | >95 |
| B' | 0.080 | 0.42 | 1.45 | 0.007 | 0.008 | 0.025 | 0.015 | 0.002 | 0.007 | 0.004 | 3 | 550 | 80 | >95 |
| C' | 0.060 | 0.45 | 1.46 | 0.009 | 0.015 | 0.044 | 0.004 | 0.003 | 0.014 | 0.003 | 45 | 490 | 55 | >95 |

Les valeurs en "%" ou en "ppm" (en poids) de chaque élément sont exprimées par rapport au poids du métal déposé hors dilution, c'est-à-dire que la valeur indiquée correspond à la quantité en grammes de l'élément considéré contenu dans 100 grammes de métal déposé.

Dans ces exemples, il n'est donné que les éléments indispensables pour cette invention ; dès lors, il est possible, voire inévitable, que d'autres éléments ou impuretés soient présents.

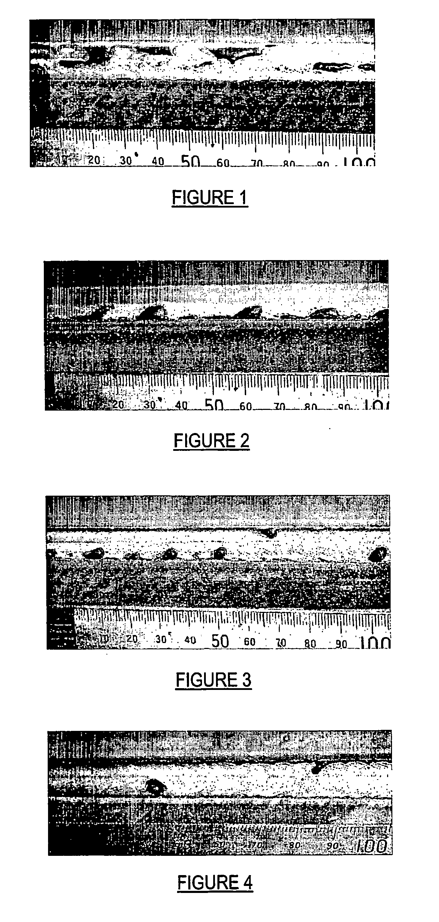

Ces échantillons de fils conduisent à l'obtention d'un métal déposé hors dilution ayant une teneur en silicium d'environ 0.4% en poids (cf. Tableau 3), ce qui correspond à une teneur couramment rencontrée dans l'état de la technique. Toutefois, on constate la présence d'amas de silicates comme en atteste les figures 1 à 3 qui sont des photographies montrant la quantité, la répartition et la forme des amas de silicates obtenus pour les échantillons de fils, correspondant aux compositions de métal déposé A', B' et C', respectivement.

Comme on le voit sur ces Figures 1 à 3, les soudures obtenues présentent des amas plus ou moins importants de silicates en surface qui se répartissent régulièrement tout au long du joint de soudure. De tels amas de silicates doivent impérativement être éliminés avant l'exécution du cordon suivant dans le cas d'une soudure multi-passes pour éviter les instabilités d'arc et la formation d'inclusions grossières au sein du nouveau cordon, inclusions qui seraient préjudiciables à la bonne tenue mécanique de l'assemblage soudé. Ils doivent aussi être éliminés sur le dernier cordon pour éviter des problèmes d'écaillage de la peinture, de corrosion ou autres.

La quantité de silicates formés lors du soudage en angle à plat a été mesurée par un calcul de surface à l'aide d'un logiciel d'analyse d'image disponible dans le commerce, par exemple le logiciel LEICA IM 1000,et les résultats ont été exprimés par le rapport Q qui représente la somme des surfaces occupées par les silicates sur la surface totale de cordon examinée, comme exprimé ci-après :

$$Q = \frac{\sum s}{S}$$

où : s est la surface des silicates observés (exprimée en mm$^2$) et S est la surface totale de cordon observée (exprimée en mm$^2$), et consignés dans le Tableau 4 ci-après.

Par ailleurs, les silicates ont été récupérés à la surface des cordons A' à C' obtenus, pesés et les résultats de ces pesées, exprimés en masse (en mg) par longueur (en mm) de cordon examiné, ont aussi été consignés dans le Tableau 4.

Tableau 4

| Métal déposé n° | Q (en %) | Masse de silicates récupérés sur la surface de cordon examinée (mg) sur une longueur de 100 mm |
|---|---|---|
| A' | 18.0 | 233 |
| B' | 14.4 | 213 |
| C' | 12.1 | 122 |

Les essais complémentaires ont été réalisés par dépôt de métal fondu en 2 passes par couche déposée selon la norme AFNOR NF A 81-351 dans les mêmes conditions que les essais réalisés en angle ci-dessus.

Les fils utilisés et les conditions de soudage étant les mêmes que précédemment les analyses chimiques des fils et du métal déposé correspondant à chaque fil sont identiques à celles ci-dessus (voir essais A' à C' consignés en Tableau 3).

Des éprouvettes de résilience ont été prélevées sur le métal déposé (A", B", C") en plaçant l'entaille dans deux positions différentes : zones à microstructure brutes de solidification (ZB) et zones à microstructure recuites (ZR) ; ces deux positions étant connues en métallurgie et décrites notamment dans le document EP-A-988130.

Tableau 5

| Etat brut de soudage Kv (Joules) à une température de - 40°C | | | | |
|---|---|---|---|---|
| | Zones recuites | | Zones brutes de solidification | |
| Essai n° | mini | Moyenne | mini | Moyenne |
| A" | 68 | 84 | 78 | 88 |

EP 1 778 432 B1

(suite)

| Etat brut de soudage Kv (Joules) à une température de - 40°C | | | | |
|---|---|---|---|---|
| | Zones recuites | | Zones brutes de solidification | |
| Essai n° | mini | Moyenne | mini | Moyenne |
| B" | 82 | 91 | 84 | 98 |
| C" | 98 | 118 | 105 | 106 |

Par ailleurs, des éprouvettes de traction ont été prélevées dans le métal fondu conformément à la norme européenne AFNOR NF A 81-351 et soumises à des tests d'évaluation classiques : résistance à la rupture, limite d'élasticité, allongement et striction. Les résultats sont donnés en Tableau 6.

Tableau 6

| Etat brut de soudage | | | | |
|---|---|---|---|---|
| Essai n° | | A" | B" | C" |
| Résistance à la rupture Rm | (MPa) | 568 | 550 | 556 |
| Limite d'élasticité Rp 0.2 | (MPa) | 467 | 460 | 480 |
| Allongement | (%) | 29 | 29 | 27 |
| Striction | (%) | 75 | 73 | 73 |

Les résultats obtenus et donnés dans les Tableaux 5 et 6 sont conformes à ce que l'on peut attendre de produits classifiés E70C6M selon la norme AWS A5-18.

Exemple 2 : Fil "sans laitier" selon l'invention à forte teneur en silicium

Dans cet exemple 2, des soudures ont été réalisés avec des fils contenant une quantité importante de silicium (Si) ; les conditions de soudage étant identiques à celles ci-dessus.
Le Tableau 7 suivant donne les compositions chimiques de chaque échantillon de fil testé (D, E, F).

Tableau 7

| % | C | Si | Mn | P | S | Ni | Al | Nb | Ti | V | B (ppm) | Fe |
|---|---|---|---|---|---|---|---|---|---|---|---|---|
| D | 0.030 | 1.07 | 1.9 | 0.015 | 0.025 | 0.036 | 0.007 | 0.004 | 0.11 | 0.005 | 59 | > 95 |
| E | 0.10 | 1.10 | 1.85 | 0.011 | 0.020 | 0.046 | 0.008 | 0.003 | 0.10 | 0.003 | 61 | > 95 |
| F | 0.090 | 0.91 | 1.7 | 0.015 | 0.020 | 0.029 | 0.050 | 0.012 | 0.11 | 0.003 | 35 | > 95 |

Le tableau 8 donne l'analyse chimique du métal déposé hors dilution pour chaque échantillon testé. On constate que les teneurs en silicium dans le métal déposé sont toutes supérieures à 0,6% en poids.

Tableau 8

| % | C | Si | Mn | P | S | Ni | Al | Nb | Ti | V | B (ppm) | O(ppm) | N (ppm) | Fe |
|---|---|----|----|---|---|----|----|----|----|---|---------|--------|---------|----|
| D' | 0.015 | 0.91 | 1.52 | 0.013 | 0.021 | 0.032 | 0.006 | 0.003 | 0.037 | 0.004 | 47 | 506 | 52 | > 95 |
| E' | 0.050 | 0.95 | 1.48 | 0.009 | 0.017 | 0.041 | 0.005 | 0.003 | 0.038 | 0.003 | 48 | 400 | 45 | > 95 |
| F' | 0.042 | 0.73 | 1.32 | 0.014 | 0.017 | 0.026 | 0.015 | 0.010 | 0.037 | 0.002 | 29 | 490 | 37 | > 95 |

Les photographies des Figures 4 à 6, respectivement, montrent la quantité, la répartition et la forme des amas de silicates obtenus pour les échantillons de fils, correspondant aux compositions de métal déposé D', E' et F', respectivement, du Tableau 8.

Comme on le voit sur ces Figures 4 à 6, les soudures obtenues présentent beaucoup moins d'amas de silicates en surface du joint de soudure que les soudures obtenues dans l'Exemple 1 (cf. figures 1 à 3).

Ceci est inattendu car on aurait pu s'attendre à une augmentation notable de la quantité d'amas de silicates du fait de la présence en plus grande quantité de silicium qui est un précurseur des silicates. Autrement dit, de façon non prévisible, l'ajout de forte quantité de silicium conduit à une diminution de la formation d'amas de silicates en surface des soudures.

De plus, la morphologie du cordon est différente. On note un meilleur mouillage et le cordon est plus plat, voire légèrement concave, ce qui correspond à une géométrie plus favorable à la bonne tenue en fatigue des assemblages ainsi soudés.

Cette réduction notable des quantités de silicates apparaît également à la lecture du Tableau 9 ci-après par rapport aux résultats obtenus dans l'Exemple 1 et consignés dans le Tableau 4.

Comme précédemment, la quantité de silicates formés a été mesurée par calcul de surface et les résultats ont été exprimés par le rapport de la somme des surfaces occupées par les silicates sur la surface totale de cordon examinée (les surfaces étant exprimées en mm$^2$ et leur rapport en %) et consignés dans le Tableau 9 ci-après.

De même, les silicates ont été récupérés à la surface des cordons D' à F', pesés et les résultats de ces pesées exprimés en masse (en mg) par longueur (en mm) de cordon examiné, ont aussi été consignés dans le Tableau 9.

Tableau 9

| Essai n° | Q (en %) | Masse de silicates récupérés sur la surface de cordon examinée (mg) sur une longueur de 100 mm |
|---|---|---|
| D' | 7.1 | 75 |
| E' | 8.5 | 86 |
| F' | 7.3 | 79 |

Comme précédemment, une évaluation des propriétés mécaniques du métal déposé a aussi été réalisée et les résultats obtenus ont été consignés ci-après.

Là encore, les essais ont été réalisés par dépôt de métal fondu en deux passes par couche selon la norme européenne AFNOR NF A 81 -351 dans les mêmes conditions que dans l'exemple 1.

L'analyse chimique du métal déposé correspondant à chaque essai D" à F" se trouve consignée dans le Tableau 10 ; les essais D" à F" ayant été réalisés avec les mêmes fils de soudage que ceux ayant servis à réaliser les échantillons D' à F'.

Comme ci-dessus, les éprouvettes de résilience ont été prélevées en plaçant l'entaille dans deux positions différentes repérées ZB et ZR, telles que décrites dans le document EP-A-988130 auquel on se reportera pour toute information complémentaire. Les résultats D" à F" pour les essais D' à F' obtenus sont donnés dans le Tableau 11.

Tableau 10

| | Etat brut de soudage Kv (Joules) à - 40°C | | | |
|---|---|---|---|---|
| | Zones recuites | | Zones brutes de solidification | |
| Essai n° | mini | moyenne | mini | moyenne |
| D" | 87 | 90 | 91 | 99 |
| E" | 101 | 117 | 98 | 105 |
| F" | 80 | 90 | 98 | 119 |

Tableau 11

| Etat brut de soudage | | | |
|---|---|---|---|
| Essai n° | D" | E" | F" |
| Résistance à la rupture Rm    (Mpa) | 547 | 598 | 561 |

(suite)

| Etat brut de soudage | | | |
|---|---|---|---|
| Essai n° | D" | E" | F" |
| Limite d'élasticité Rp 0.2    (Mpa) | 473 | 543 | 519 |
| Allongement (%) | 30 | 27 | 30 |
| Striction (%) | 72 | 68 | 70 |

Comme visible dans les Tableaux 10 et 11, malgré une présence de silicium en quantité importante dans le métal déposé, il est possible de maintenir un excellent niveau de résilience à basse température.

En outre, il est bien connu que l'addition de titane et de bore dans le métal fondu favorise la formation de ferrite aciculaire, ce qui permet d'améliorer notablement le niveau de résilience. On vérifie cet effet par les valeurs de résilience obtenues avec les dépôts des fils D, E, F, indiquées dans le tableau 10. Toutefois, lorsque l'application n'exige pas d'atteindre de tels niveaux de résilience, il ne sera pas obligatoire d'avoir recours au titane et au bore puisque l'effet Ti -B ne sera alors pas nécessaire.

Par ailleurs, l'élément titane a des propriétés de stabilisateur d'arc et permet de réduire la taille des gouttes de métal lors de leur transfert du fil au métal à souder.

Exemple 3 : Fil "sans laitier" selon l'invention à forte teneur en silicium et avec addition d'éléments tensioactifs

Des essais complémentaires ont été réalisés avec des fils de soudage dans lesquels des éléments ayant un effet tensioactif marqué ont été rajoutés, en particulier du sélénium (Se) et du tellure (Te), de manière à évaluer l'impact de ces éléments sur le métal déposé obtenu avec ces fils.

Le Tableau 12 suivant donne les compositions chimiques de chaque échantillon de fil testé (G, H, I).

Tableau 12

| % | C | Si | Mn | P | S | Ni | Al | Nb | Ti | V | B (ppm) | Se (ppm) | Te (ppm) | Fe |
|---|---|---|---|---|---|---|---|---|---|---|---|---|---|---|
| G | 0.085 | 0.93 | 1.83 | 0.012 | 0.020 | 0.031 | 0.005 | 0.004 | 0.031 | 0.002 | 47 | 340 | 58 | > 95 |
| H | 0.097 | 1.0 | 1.9 | 0.014 | 0.022 | 0.038 | 0.005 | 0.003 | 0.040 | 0.001 | 70 | 350 | 59 | > 95 |
| I | 0.11 | 0.95 | 2.1 | 0.012 | 0.022 | 0.034 | 0.006 | 0.004 | 0.045 | 0.002 | 68 | 75 | 170 | > 95 |

Le Tableau 13 décrit l'analyse chimique du métal déposé de chaque échantillon G' à l' testé dans cet exemple 3.

Tableau 13

| % | C | Si | Mn | P | S | Ni | Al | Nb | Ti | V | B (ppm) | Se (ppm) | Te (ppm) | O (ppm) | N (ppm) | Fe |
|---|---|---|---|---|---|---|---|---|---|---|---|---|---|---|---|---|
| G' | 0.055 | 0.72 | 1.45 | 0.010 | 0.017 | 0.028 | 0.003 | 0.002 | 0.009 | 0.001 | 33 | 114 | 18 | 480 | 31 | > 95 |
| H' | 0.075 | 0.81 | 1.60 | 0.011 | 0.019 | 0.033 | 0.003 | 0.002 | 0.011 | 0.001 | 48 | 115 | 21 | 480 | 48 | > 95 |
| I' | 0.073 | 0.80 | 1.65 | 0.011 | 0.019 | 0.032 | 0.003 | 0.002 | 0.012 | 0.001 | 47 | 25 | 60 | 530 | 52 | > 95 |

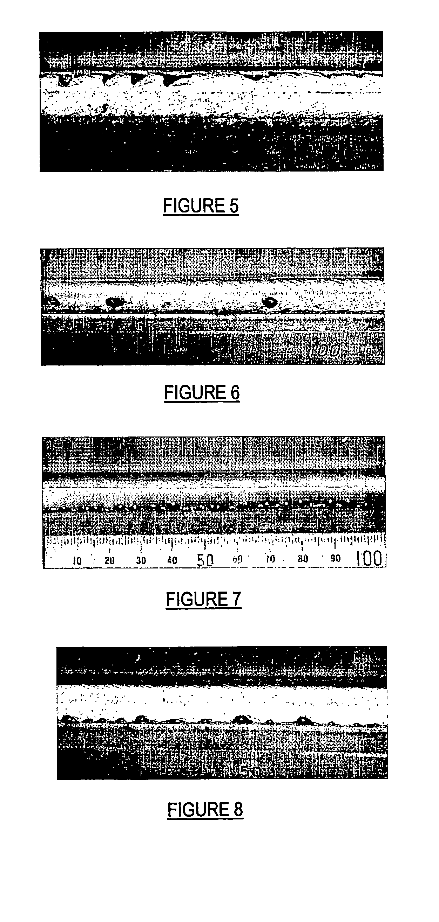

Ces essais montrent que l'addition d'éléments tensioactifs, tels que sélénium et/ou tellure, réduit encore la quantité de silicates formés en surface des cordons de soudure et modifie leur morphologie et leur répartition, comme visible sur les Figures 7 à 9 qui sont des photographies des cordons de soudure réalisés avec les fils G à I.

On peut observer qu'avec ces additions de tensioactifs, les amas de silicates se situent sur la partie basse du cordon, répartis sous forme de petites "billes" le long de la lisière avec le métal de base.

Les surfaces de silicates mesurées dans cet Exemple 3, conformément à la méthode de l'Exemple 1, et consignées dans le Tableau 14 sont équivalentes à celles obtenues dans les conditions de l'Exemple 2 (voir Tableau 9) mais les masses de silicates mesurées dans cet Exemple 3 sont plus faibles que dans l'Exemple 2, ce qui démontre l'effet bénéfique de la présence d'éléments tensioactifs dans le fil de soudage.

De plus, il est à noter que les quelques "amas" de silicates présents en surface des cordons sont très facilement détachables.

Tableau 14

| Essai n° | Q (%) | Masse de silicates récupérés sur la surface de cordon examinée (mg) sur un longueur de 100 mm |
|---|---|---|
| G' | 6.1 | 51 |
| H' | 7.2 | 57 |
| I' | 5.3 | 41 |

De là, le métal déposé, c'est-à-dire le joint de soudure, doit contenir préférentiellement de 0.0001% à 0.025% de sélénium et/ou de 0.0001% à 0.025% de tellure par rapport au poids total de métal déposé. Toutefois, il est à noter qu'au dessus de ces valeurs, le risque de fissuration à chaud devient important.

Exemple 4 : Fil "sans laitier" selon l'invention et influence du gaz de protection

Dans cet Exemple 4, on a étudié l'impact du gaz de protection sur la quantité de silicates formés sur la surface du cordon, c'est-à-dire l'influence du pouvoir d'oxydation du gaz de protection sur le cordon.

Pour ce faire, on a remplacé le gaz de protection composé de 82% en volume d'argon et 18% de $CO_2$ utilisé dans l'Exemple 3 pour réaliser l'essai H, qui est illustré par la figure 8, par un gaz moins oxydant composé de 96% d'argon, de 3% $CO_2$ et 1% d'$O_2$ (% en volume). Les autres conditions de soudage sont restées identiques.

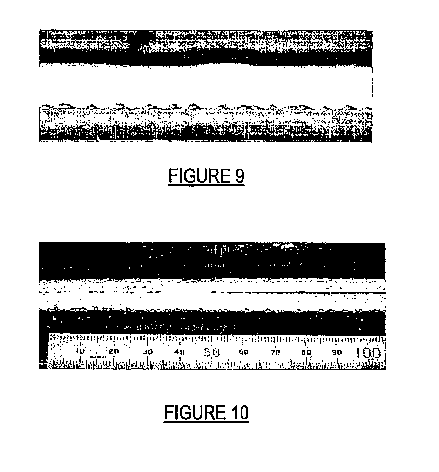

Les résultats obtenus sont consignés dans le Tableau 15 ci-après et sont illustrés par la Figure 10.

Tableau 15

| Essai | Q (%) | Masse de silicates récupérés sur la surface de cordon examinée (mg) pour une longueur de 100 mm |
|---|---|---|
| J | 1 | 9 |

Comme on le constate, la quantité de silicates mesurée est extrêmement faible et le joint de soudure obtenu ne comporte que très peu d'amas de silicates (voir Figure 10). Ceci montre que plus le pouvoir d'oxydation du gaz de protection sera faible, plus la quantité de silicates formés sera réduite.

**Revendications**

1. Fil fourré de soudage comprenant une enveloppe métallique externe et des éléments de remplissage contenus dans ladite enveloppe métallique, lesdits éléments de remplissage représentant de 8 à 27 % de la masse totale du fil et contenant de 2 % à 8 % en poids de silicium, et ladite enveloppe métallique étant formée d'au moins 90% en poids de fer
**caractérisé en ce qu'**il contient par rapport au poids total du fil :

   - de 0.7% à 1.6% de silicium provenant de l'enveloppe et/ou des éléments de remplissage,
   - de 1 % à 2,99% de manganèse,
   - de 0.001% à 0.1% d'aluminium et
   - de 0.001% à 0.2% de titane.

2. Fil selon la revendication 1, **caractérisé en ce qu'**il contient, par rapport au poids total du fil, de 0.005% à 0.2% de titane.

3. Fil selon l'une des revendications 1 ou 2, **caractérisé en ce qu'**il contient, en outre de 300 à 2000 ppm d'oxygène par rapport au poids total du fil.

4. Fil fourré selon l'une des revendications 1 à 3, **caractérisé en ce qu'**il contient, en outre, par rapport au poids total du fil, en tant qu'agent tensioactif :

   - de 0.001 % à 0.03% de soufre et/ou
   - de 0.0001 % à 0.05% de sélénium et/ou
   - de 0.0001 % à 0.05% de tellure.

5. Fil fourré selon l'une des revendications 1 à 4, **caractérisé en ce qu'**il contient, en outre, par rapport au poids total du fil, de 0.01 % à 0.2% de carbone et/ou de 1 à 150 ppm de bore.

6. Fil fourré selon l'une des revendications 1 à 5, **caractérisé en ce qu'**il contient, en outre, par rapport au poids total du fil, en tant qu'élément d'alliage :

   - de 0.015% à 3% de chrome, de préférence moins de 0.6% de chrome,
   - moins de 8% de nickel et/ou
   - moins de 1.6% de molybdène.

7. Fil fourré selon l'une des revendications 1 à 5, **caractérisé en ce qu'**il contient, en outre, par rapport au poids total du fil, en tant qu'élément d'alliage de 9% à 20% de chrome et/ou moins de 8% de nickel et/ou moins de 1.6% de molybdène.

8. Fil fourré selon l'une des revendications 1 à 7, **caractérisé en ce qu'**il contient, en outre, par rapport au poids total du fil, de 0.001 % à 0.030% de niobium et/ou de 0.001% à 0.030% de vanadium.

9. Fil selon l'une des revendications 1 à 8, **caractérisé en ce qu'**il contient au moins un constituant désoxydant choisi parmi Fe-Mn, Fe-Si, Fe-Si-Mn, Fe-Si-Ti, Fe-Zr et Fe-Si-Zr.

10. Fil selon l'une des revendications 1 à 9, **caractérisé en ce qu'**il contient, en outre, au moins un agent stabilisateur d'arc du type Na et/ ou K, en particulier NaF, $K_2SiF_6$ et $Na_2SiF_6$.

11. Fil selon l'une des revendications 6 ou 7, **caractérisé en ce que** le nickel, le chrome et/ou le molybdène sont sous forme de nickel métal, Fe-Ni, chrome métal, Fe-Cr, molybdène métal ou Fe-Mo.

12. Procédé de soudage à l'arc électrique sous flux gazeux de protection, dans lequel on réalise un joint de soudure par fusion d'un fil de soudage selon l'une des revendications 1 à 11, de préférence le joint de soudure est réalisé sur une ou plusieurs pièces en acier ferritique.

13. Procédé selon la revendication 12, **caractérisé en ce que** le flux gazeux de protection est formé d'un mélange d'un ou plusieurs gaz inertes avec un ou plusieurs gaz oxydants.

14. Procédé selon l'une des revendications 12 ou 13, **caractérisé en ce que** le flux gazeux de protection est formé d'au moins un gaz inerte choisi parmi l'argon et l'hélium et d'au moins un gaz oxydant choisi parmi $CO_2$ et $O_2$.

15. Procédé selon l'une des revendications 12 à 14, **caractérisé en ce que** le flux gazeux de protection est constitué de 70 à 99.9 % en volume d'argon et de 0.1 à 30 % en volume de $CO_2$ et /ou d'$O_2$.

16. Joint de soudure ou métal déposé susceptible d'être obtenu par le procédé selon l'une des revendications 12 à 15 ou au moyen d'un fil fourré selon l'une des revendications 1 à 11, **caractérisé en ce qu'**il contient, par rapport au poids total de métal déposé, de 0.5% à 1.3% de silicium, et au moins 80% en poids de fer, **en ce qu'**il présente une proportion d'amas de silicates tel que : Q < 11, de préférence Q < 9, avec :

$$Q = \frac{\sum s}{S}$$

où : s est la surface de silicates observés (exprimée en mm$^2$) et S est la surface totale de cordon observée (exprimée en mm$^2$),
et **en ce que** la masse m, exprimée en mg pour 100 mm de longueur de cordon, des silicates présents sur le cordon obtenu est telle que : m < 100, de préférence m< 65, de préférence encore m < 20.

**17.** Joint de soudure ou métal déposé selon la revendication 16, **caractérisé en ce qu'**il contient de 0.7% à 2% en poids de manganèse.

**18.** Joint de soudure ou métal déposé selon l'une des revendications 16 ou 17, **caractérisé en ce qu'**il contient de 200 à 800 ppm d'oxygène, de préférence moins de 600 ppm d'oxygène, avantageusement moins de 500 ppm d'oxygène.

**19.** Joint de soudure ou métal déposé selon l'une des revendications 16 à 18, **caractérisé en ce qu'**il contient, par ailleurs, de 0.005% à 0.05% en poids de titane et/ou de 0.001% à 0.050% en poids d'aluminium, de préférence moins de 0.025 % d'aluminium, de préférence encore moins de 0.010% d'aluminium.

**20.** Joint de soudure ou métal déposé selon l'une des revendications 16 à 19, **caractérisé en ce qu'**il contient, par ailleurs, de 0.001% à 0.030% de soufre, de 0.0001% à 0.025% de sélénium et/ou de 0.0001% à 0.025% de tellure, de préférence moins de 0.025% de soufre.

**21.** Joint de soudure ou métal déposé selon l'une des revendications 16 à 20, **caractérisé en ce qu'**il contient de 0.010% à 0.12% en poids de carbone et/ou de 1 à 100 ppm de bore, de préférence moins de 80 ppm de bore.

**22.** Joint de soudure ou métal déposé selon l'une des revendications 16 à 21, **caractérisé en ce qu'**il contient, par ailleurs, moins de 80 ppm d'azote, de préférence moins de 50 ppm d'azote.

**23.** Joint de soudure ou métal déposé selon l'une des revendications 16 à 22, **caractérisé en ce qu'**il contient, par ailleurs, moins de 6% de nickel, de 0.01% à 3% de chrome et/ou moins de 1.5 % de molybdène.

**24.** Joint de soudure ou métal déposé selon l'une des revendications 16 à 22, **caractérisé en ce qu'**il contient, par ailleurs, moins de 6% de nickel, de 7% à moins de 18% de chrome et/ou moins de 1,5% de molybdène.

**25.** Joint de soudure ou métal déposé selon l'une des revendications 16 à 24, **caractérisé en ce qu'**il contient, par ailleurs, de 0.001% à 0.030% en poids de niobium et/ou de 0.001% à 0.030% en poids de vanadium.

**Claims**

**1.** Flux-cored welding wire comprising an outer metal casing and filler elements contained in said metal casing, said filler elements representing 8 to 27 % of the total mass of the wire and containing 2 % to 8 % by weight silicon, and said casing being formed of at least 90 % by weight iron, **characterised in that** it contains, based on the total weight of the wire:

- 0.7 % to 1.6 % silicon originating from the casing and/or the filler elements,
- 1 % to 2.99 % manganese,
- 0.001 % to 0.1 % aluminium and
- 0.001 % to 0.2 % titanium.

**2.** Wire according to claim 1, **characterised in that** it contains, based on the total weight of the wire, 0.005 % to 0.2 % titanium.

**3.** Wire according to either claim 1 or claim 2, **characterised in that** it further contains 300 to 2000 ppm oxygen, based on the total weight of the wire.

4. Flux-cored wire according to any one of claims 1 to 3, **characterised in that** it further contains, based on the total weight of the wire, as a surface active agent:

- 0.001 % to 0.03 % sulphur and/or
- 0.0001 % to 0.05 % selenium and/or
- 0.0001 % to 0.05 % tellurium.

5. Flux-cored wire according to any one of claims 1 to 4, **characterised in that** it further contains, based on the total weight of the wire, 0.01 % to 0.2 % carbon and/or 1 to 150 ppm boron.

6. Flux-cored wire according to any one of claims 1 to 5, **characterised in that** it further contains, based on the total weight of the wire, as an alloying element:

- 0.015 % to 3 % chromium, preferably less than 0.6 % chromium,
- less than 8 % nickel and/or
- less than 1.6 % molybdenum.

7. Flux-cored wire according to any one of claims 1 to 5, **characterised in that** it further contains, based on the total weight of the wire, as an alloying element, 9 % to 20 % chromium and/or less than 8 % nickel and/or less than 1.6 % molybdenum.

8. Flux-cored wire according to any one of claims 1 to 7, **characterised in that** it further contains, based on the total weight of the wire, 0.001 % to 0.030 % niobium and/or 0.001 % to 0.030 % vanadium.

9. Wire according to any one of claims 1 to 8, **characterised in that** it comprises at least a deoxidising component selected from Fe-Mn, Fe-Si, Fe-Si-Mn, Fe-Si-Ti, Fe-Zr and Fe-Si-Zr.

10. Wire according to any one of claims 1 to 9, **characterised in that** it further contains at least an arc-stabilising agent of the type Na and/or K, in particular NaF, $K_2SiF_6$ and $Na_2SiF_6$.

11. Wire according to either claim 6 or claim 7, **characterised in that** the nickel, chromium and/or molybdenum are in the form of nickel metal, Fe-Ni, chromium metal, Fe-Cr, molybdenum metal or Fe-Mo.

12. Method for electric-arc welding under a protective gas stream, wherein a weld joint is produced by fusing a welding wire according to any one of claims 1 to 11, the weld joint preferably being produced on one of more ferritic stainless steel parts.

13. Method according to claim 12, **characterised in that** the protective gas stream is formed of a mixture of one or more inert gases with one or more oxidising gases.

14. Method according to either claim 12 or claim 13, **characterised in that** the protective gas stream is formed of at least an inert gas selected from argon and helium and at least an oxidising gas selected from $CO_2$ and $O_2$.

15. Method according to any one of claims 12 to 14, **characterised in that** the protective gas stream consists of 70 to 99.9 % by volume argon and 0.1 to 30 % by volume $CO_2$ and/or $O_2$.

16. Weld joint or deposited metal obtainable by the method according to any one of claims 12 to 15 or by means of a flux-cored wire according to any one of claims 1 to 11, **characterised in that** it contains, based on the total weight of the deposited metal, 0.5 % to 1.3 % silicon, and at least 80 % by weight iron, **in that** it has a silicate cluster proportion such that: Q < 11, preferably Q < 9, with:

$$Q = \frac{\sum s}{S}$$

where: s is the surface of observed silicates (expressed in $mm^2$) and S is the total seam surface observed (expressed in $mm^2$), and **in that** the mass m, expressed in mg for 100 mm length of seam, of the silicates present on the obtained seam is such that: m < 100, preferably m < 65, more preferably m < 20.

17. Weld joint or deposited metal according to claim 16, **characterised in that** it contains 0.7 % to 2 % by weight manganese.

18. Weld joint or deposited metal according to either claim 16 or claim 17, **characterised in that** it contains 200 to 800 ppm oxygen, preferably less than 600 ppm oxygen, advantageously less than 500 ppm oxygen.

19. Weld joint or deposited metal according to any one of claims 16 to 18, **characterised in that** it further contains 0.005 % to 0.05 % by weight titanium and/or 0.001 % to 0.050 % by weight aluminium, preferably less than 0.025 % aluminium, more preferably less than 0.010 % aluminium.

20. Weld joint or deposited metal according to any one of claims 16 to 19, **characterised in that** it further contains 0.001 % to 0.030 % sulphur, 0.0001 % to 0.025 % selenium and/or 0.0001 % to 0.025 % tellurium, preferably less than 0.025 % sulphur.

21. Weld joint or deposited metal according to any one of claims 16 to 20, **characterised in that** it contains 0.010 % to 0.12 % by weight carbon and/or 1 to 100 ppm boron, preferably less than 80 ppm boron.

22. Weld joint or deposited metal according to any one of claims 16 to 21, **characterised in that** it further contains less than 80 ppm nitrogen, preferably less than 50 ppm nitrogen.

23. Weld joint or deposited metal according to any one of claims 16 to 22, **characterised in that** it further contains less than 6 % nickel, 0.01 % to 3 % chromium and/or less than 1.5 % molybdenum.

24. Weld joint or deposited metal according to any one of claims 16 to 22, **characterised in that** it further contains less than 6 % nickel, 7 % to less than 18 % chromium and/or less than 1.5 % molybdenum.

25. Weld joint or deposited metal according to any one of claims 16 to 24, **characterised in that** it further contains 0.001 % to 0.030 % by weight niobium and/or 0.001 % to 0.030 % by weight vanadium.

**Patentansprüche**

1. Fülldraht zum Schweißen, der eine äußere Metallummantelung und Füllelemente, die in der Metallummantelung enthalten sind, umfasst, wobei die Füllelemente 8 bis 27 % der Gesamtmasse des Drahtes ausmachen und 2 Gewichts-% bis 8 Gewichts-% Silizium enthalten, und wobei die Metallummantelung aus mindestens 90 Gewichts-% Eisen gebildet ist, **dadurch gekennzeichnet, dass** er im Verhältnis zum Gesamtgewicht des Drahtes

   - 0,7 % bis 1,6 % Silicium, die aus der Ummantelung und/oder den Füllelementen stammen,
   - 1 % bis 2,99 % Mangan,
   - 0,001 % bis 0,1 % Aluminium und
   - 0,001 % bis 0,2 % Titan enthält.

2. Draht nach Anspruch 1, **dadurch gekennzeichnet, dass** er, im Verhältnis zum Gesamtgewicht des Drahtes 0,005 % bis 0,2 % Titan enthält.

3. Draht nach einem der Ansprüche 1 oder 2, **dadurch gekennzeichnet, dass** er ferner 300 bis 2.000 ppm Sauerstoff im Verhältnis zum Gesamtgewicht des Drahtes enthält.

4. Fülldraht nach einem der Ansprüche 1 bis 3, **dadurch gekennzeichnet, dass** er ferner im Verhältnis zum Gesamtgewicht des Drahtes als oberflächenaktivem Stoff

   - 0,001 % bis 0,03 % Schwefel und/oder
   - 0,0001 % bis 0,05 % Selen und/oder
   - 0,0001 % bis 0,05 % Tellur enthält.

5. Fülldraht nach einem der Ansprüche 1 bis 4, **dadurch gekennzeichnet, dass** er ferner im Verhältnis zum Gesamtgewicht des Drahtes 0,01 % bis 0,2 % Kohlenstoff und/oder 1 bis 150 ppm Bor enthält.

6. Fülldraht nach einem der Ansprüche 1 bis 5, **dadurch gekennzeichnet, dass** er ferner im Verhältnis zum Gesamtgewicht des Drahtes als Legierungselement,

- 0,015 % bis 3 % Chrom, vorzugsweise weniger als 0,6 % Chrom,
- weniger als 8 % Nickel und/oder
- weniger als 1,6 % Molybdän enthält.

7. Fülldraht nach einem der Ansprüche 1 bis 5, **dadurch gekennzeichnet, dass** er ferner im Verhältnis zum Gesamtgewicht des Drahtes als Legierungselement, 9 % bis 20 % Chrom und/oder weniger als 8 % Nickel und/oder weniger als 1,6 % Molybdän enthält.

8. Fülldraht nach einem der Ansprüche 1 bis 7, **dadurch gekennzeichnet, dass** er ferner im Verhältnis zum Gesamtgewicht des Drahtes 0,001 % bis 0,030 % Niobium und/oder 0,001 % bis 0,030 % Vanadium enthält.

9. Draht nach einem der Ansprüche 1 bis 8, **dadurch gekennzeichnet, dass** er mindestens einen Sauerstoff entziehenden Bestandteil enthält, der aus Fe-Mn, Fe-Si, Fe-Si-Mn, Fe-Si-Ti, Fe-Zr und FeSi-Zr gewählt ist.

10. Draht nach einem der Ansprüche 1 bis 9, **dadurch gekennzeichnet, dass** er, ferner, mindestens ein Lichtbogenstabilisierungsmittel vom Typ Na und/oder K, insbesondere NaF, $K_2SiF_6$ und $Na_2SiF_6$ enthält.

11. Draht nach einem der Ansprüche 6 oder 7, **dadurch gekennzeichnet, dass** Nickel, Chrom und/oder Molybdän in Form von metallischem Nickel, Fe-Ni, metallischem Chrom, Fe-Cr, metallischem Molybdän oder Fe-Mo vorliegen.

12. Verfahren zum Lichtbogenschweißen in einer Schutzgasströmung, bei dem eine Schweißnaht durch Schmelzen eines Schweißdrahtes nach einem der Ansprüche 1 bis 11 realisiert wird, wobei die Schweißnaht vorzugsweise an einem oder mehreren Teilen aus ferritischem Stahl realisiert wird.

13. Verfahren nach Anspruch 12, **dadurch gekennzeichnet, dass** die Schutzgasströmung aus einem Gemisch von einem oder mehreren Inertgasen mit einem oder mehreren oxidierenden Gasen gebildet ist.

14. Verfahren nach einem der Ansprüche 12 oder 13, **dadurch gekennzeichnet, dass** die Schutzgasströmung aus einem Gemisch von mindestens einem Inertgas, das aus Argon und Helium gewählt ist, und von mindestens einem oxidierenden Gas, das aus $CO_2$ und $O_2$ gewählt ist, gebildet ist.

15. Verfahren nach einem der Ansprüche 12 bis 14, **dadurch gekennzeichnet, dass** die Schutzgasströmung zu 70 bis 99,9 Volumen-% aus Argon und zu 0,1 bis 30 Volumen-% aus $CO_2$ und/oder $O_2$ besteht.

16. Schweißnaht oder abgeschiedenes Metall, die bzw. das durch das Verfahren nach einem der Ansprüche 12 bis 15 oder mittels eines Fülldrahtes nach einem der Ansprüche 1 bis 11 erhalten werden kann, **dadurch gekennzeichnet, dass** sie bzw. es im Verhältnis zum Gesamtgewicht des abgelagerten Metalls 0,5 % bis 1,3 % Silicium und mindestens 80 Gewichts-% Eisen enthält, dass sie bzw. es einen Anteil an Silikathäufungen aufweist, wie: Q < 11, vorzugsweise Q < 9, mit:

$$Q = \frac{\Sigma s}{S}$$

wobei: s die Fläche an beobachteten Silikaten (ausgedrückt in mm$^2$) und S die beobachtete Nahtgesamtfläche (ausgedrückt in mm$^2$) ist, und dass die Masse m, ausgedrückt in mg bei 100 mm Nahtlänge, der auf der erhaltenen Naht vorhandenen Silikate gleich m < 100, vorzugsweise m< 65, weiter vorzugsweise m < 20 ist.

17. Schweißnaht oder abgelagertesMetall nach Anspruch 16, **dadurch gekennzeichnet, dass** sie bzw. es 0,7 Gewichts-% bis 2 Gewichts-% Mangan enthält.

18. Schweißnaht oder abgelagertes Metall nach einem der Ansprüche 16 oder 17, **dadurch gekennzeichnet, dass** sie bzw. es 200 bis 800 ppm Sauerstoff, vorzugsweise weniger als 600 ppm Sauerstoff, vorteilhafterweise weniger als 500 ppm Sauerstoff enthält.

19. Schweißnaht oder abgelagertes Metall nach einem der Ansprüche 16 bis 18, **dadurch gekennzeichnet, dass** sie bzw. es im Übrigen 0,005 Gewichts-% bis 0,05 Gewichts-% Titan und/oder 0,001 Gewichts-% bis 0,050 Gewichts-% Aluminium, vorzugweise weniger als 0,025 % Aluminium, weiter vorzugsweise weniger als 0,010 % Aluminium enthält.

20. Schweißnaht oder abgelagertes Metall nach einem der Ansprüche 16 bis 19, **dadurch gekennzeichnet, dass** sie bzw. es im Übrigen0,001 Gewichts-% bis 0,030 Gewichts-% Schwefel, 0,0001 Gewichts-% bis 0,025 Gewichts-% Selen und/oder 0,0001 Gewichts-% bis 0,025 Gewichts-% Tellur, vorzugsweise weniger als 0,025 Gewichts-% Schwefel enthält.

21. Schweißnaht oder abgelagertes Metall nach einem der Ansprüche 16 bis 20, **dadurch gekennzeichnet, dass** sie bzw. es 0,010 Gewichts-% bis 0,12 Gewichts-% Kohlenstoff und/oder 1 bis 100 ppm Bor, vorzugsweise weniger als 80 ppm Bor enthält.

22. Schweißnaht oder abgelagertes Metall nach einem der Ansprüche 16 bis 21, **dadurch gekennzeichnet, dass** sie bzw. es im Übrigen weniger als 80 ppm Stickstoff, vorzugsweise weniger als 50 ppm Stickstoff enthält.

23. Schweißnaht oder abgelagertes Metall nach einem der Ansprüche 16 bis 22, **dadurch gekennzeichnet, dass** sie bzw. es im Übrigen weniger als 6 % Nickel, 0,01 % bis 3 % Chrom und/oderwenigerals 1,5 % Molybdän enthält.

24. Schweißnaht oder abgeschiedenes Metall nach einem der Ansprüche 16 bis 22, **dadurch gekennzeichnet, dass** sie bzw. es im Übrigen weniger als 6 % Nickel, 7 % bis weniger als 18 % Chrom und/oder weniger als 1,5 % Molybdän enthält.

25. Schweißnaht oder abgeschiedenes Metall nach einem der Ansprüche 16 bis 24, **dadurch gekennzeichnet, dass** sie bzw. es im Übrigen 0,001 Gewichts-% bis 0,030 Gewichts-% Niobium und/oder 0,001 Gewichts-% bis 0,030 Gewichts-% Vanadium enthält.

FIGURE 1

FIGURE 2

FIGURE 3

FIGURE 4

FIGURE 5

FIGURE 6

FIGURE 7

FIGURE 8

FIGURE 9

FIGURE 10

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 988130 A